(19) **Europäisches Patentamt / European Patent Office / Office européen des brevets**

(11) **EP 2 058 986 B2**

(12) # NEW EUROPEAN PATENT SPECIFICATION
## After opposition procedure

(45) Date of publication and mention
of the opposition decision:
**18.06.2014 Bulletin 2014/25**

(45) Mention of the grant of the patent:
**01.09.2010 Bulletin 2010/35**

(21) Application number: **07720919.5**

(22) Date of filing: **23.04.2007**

(51) Int Cl.:
***H04L 12/70*** (2013.01)

(86) International application number:
**PCT/CN2007/001346**

(87) International publication number:
**WO 2008/037155 (03.04.2008 Gazette 2008/14)**

(54) **A METHOD FOR DETERMINING A ROUTING PATH AND A ROUTING PATH DETERMINATION UNIT**

VERFAHREN ZUR BESTIMMUNG EINES LEITWEGES UND LEITWEGBESTIMMUNGSEINHEIT

PROCÉDÉ DE DÉTERMINATION D'UN TRAJET D'ACHEMINEMENT ET UNITÉ DE DÉTERMINATION DE TRAJET D'ACHEMINEMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.09.2006 CN 200610152687**

(43) Date of publication of application:
**13.05.2009 Bulletin 2009/20**

(73) Proprietor: **Huawei Technologies Co., Ltd.**
**Shenzhen, Guangdong Province 518129 (CN)**

(72) Inventors:
• **LI, Qiao**
**Shenzhen Guangdong 518219 (CN)**
• **XU, Zhanqi**
**Shenzhen Guangdong 518219 (CN)**
• **HUO, Jing**
**Shenzhen Guangdong 518219 (CN)**
• **SU, Yang**
**Shenzhen Guangdong 518219 (CN)**
• **WANG, Fei**
**Shenzhen Guangdong 518219 (CN)**

(74) Representative: **Thun, Clemens**
**Mitscherlich PartmbB**
**Patent- und Rechtsanwälte**
**Sonnenstraße 33**
**80331 München (DE)**

(56) References cited:
EP-A- 1 255 373          CN-A- 1 791 000
US-A1- 2005 232 157      US-B1- 6 195 553

• HE R. ET AL.: 'dynamic routing and wavelength assigment algorithms in IP/MPLS over WDM networks' JOURNAL OF ELECTRONICS AND INFORMATION TECHNOLOGY vol. 25, no. 8, 31 August 2003, pages 1081 - 1087, XP008103341
• JIN M, LU B, LI L.: 'integrated routing for IP traffic in spanning IP/DWDM networks' JOURNAL OF CHINA INSTITUTE OF COMMUNICATIONS vol. 24, no. 3, 31 March 2003, pages 55 - 63, XP008104126
• HONGYUE ZHU ET AL.: 'A Novel Generic Graph Model for Traffic Grooming in Heterogeneous WDM Mesh Networks' IEEE/ACM TRANSACTIONS ON NETWORKING vol. 11, no. 2, 30 April 2003, pages 285 - 299, XP008103299

EP 2 058 986 B2

**Description**

FIELD OF THE INVENTION

The present invention relates to the field of communication technologies, and in particular, to a method for determining a route path and a route path determining unit.

BACKGROUND

With the rapid development of the Internet and higher requirement for the service quality, a high-band transport network which supports Internet Protocol (IP) services effectively is urgently required. An interconnection-type Wavelength Division Multiplexing (WDM) optical transport network based on the wavelength division multiplexing and optical cross-connection technologies well fulfills the bandwidth requirement of the growing IP services. The traditional IP over ATM over SDH over WDM L4 network no longer meets the conciseness requirements of the network management because many functions are overlapped and the management and control plane is too complicated. People begin to bear IP services on the WDM network directly, thus developing an IP-over-WDM technology. The IP-over-WDM technology may expand the existing network bandwidth immensely, and is a megatrend of the broadband IP backbone network.

In view of the development of the Multi-Protocol Label Switching (MPLS) technology, people combine the MPLS technology with the optical Internet, thus giving rise to the General Multi-Protocol Label Switching (GMPLS) technology. The GMPLS technology uses optical wavelength as a switching label, integrates the IP-layer route forwarding with the optical switching of the WDM physical layer seamlessly, uses the wavelength to search for a route, identifies the created optical channel, and provides the upper-layer service with a high-speed wavelength switching channel.

In the document "A Novel Generic Graph Model for Traffic Grooming in Heterogeneous WDM Mesh Networks" (IEEE/ACM Transactions on Networking, 2003,11 (2): 285~299) written by Zhu H Y, Zang H and Zhu K Y, two routing algorithms are described: Minimum Trail Hops (MinTH) algorithm and Minimized Light Paths (MinLP) algorithm. The two route algorithms are described separately below.

In the MinTH algorithm, every effort is made to minimize the number of optical path hops traversed by the Label Switching Path (LSP) of each pair of source node and sink node. According to this policy, the single-hop optical path is preferred between the source node and the sink node. For an LSP connection request, the steps of creating a route are as follows:

Step 100: If a single-hop (direct) optical path already exists on a wavelength plane of the source node and sink node, the optical path bears the new incoming LSP connection requests as long as enough bandwidth is available.

Step 200: If no single-hop (direct) optical path exists between the source node and the sink node, a single-hop (direct) optical path is created between the source node and the sink node. In the process of creating the optical path, the wavelength link is allocated according to the First-Fit rule.

When in Step 100, no single-hop optical channel suitable for the LSP connection request is found., and in Step 200, it is unable to create a single-hop optical path, the multi-hop optical path routing mode is applied to the LSP connection request, but the hops of the optical path should be minimized.

In the MinTH algorithm, the hops of the optical path traversed by the IP service stream can be minimized. However, the MinTH prefers single-hop optical paths as far as possible. Therefore, if the service quantity is the same in the network, many optical paths need to be created. In the process of creating an optical path, since the existing optical path is not preferred, many wavelength links are consumed. In this case, when the subsequent service bandwidth requirement is huge, it is possible that no idle wavelength link is available in the whole system, thus leading to failure of the service connection, increasing the congestion ratio of the connection requests, and making it impossible to making full use of the network bandwidth resources.

In the MinLP algorithm, in order to minimize the number of optical paths that need to be created for bearing an LSP connection request, the steps of routing a MinLP are:

If there are multiple optical paths between a source node and a sink node, the optical path with the least hops is preferred for bearing the new incoming LSP connection request.
If new optical paths are created, the newly created optical paths should be minimized.

In the MinLP algorithm, only the optical paths in the network need to be minimized, and the impact of available bandwidth on routing is ignored. Therefore, it is impossible to make full use of the bandwidth resources of the network. US 2005/232157, which is filed in October 20, 2005, discloses a method for managing network traffic which includes provisioning an internet protocol (IP) network for communicating traffic. The IP network comprises a plurality of nodes coupled by IP links. The method includes monitoring the IP network for a congestion event and, upon detecting a congestion event, selecting a label switched path (LSP) of the IP network for reroute. The method includes computing a hybrid path route for the selected LSP between a first node and a second node of the plurality of nodes. The hybrid path route comprises at least one lightpath of a wavelength division multiplex (WDM) topology coupled to the IP network. The method also includes determining whether performance of the hybrid path route for the selected LSP reduces costs and, if the hybrid path route reduces costs, activating a new IP link on each of the at least one lightpaths of the WDM topology and rerouting the selected LSP according to the hybrid path route.

The document "A novel Generic Graph Model for Traffic Grooming in Heterogeneous WDM Mesh Network" (Hongyue ZHUE and co) discloses a least-cost route search preformed on a network topology. Minimum Trail Hps, MinTH and Minimized Light Paths (MinLP) algorithms are used. Only one of two results is used, either to minimize the number of optical paths hops traversed by the LSP or to minimize the number of optical paths that needs be created for bearing LSP connection request.

SUMMARY

The objectives of the present invention are to provide a method for determining a routing path, and a routing path determining unit. This solves the defects brought by the disregard of the impact of the available bandwidth and the wavelength link quantity in the existing logic link on the routing.

A method for determining a routing path in an embodiment of the present invention includes:

receiving a service connection request message, which includes a source node identifier, a sink node identifier, and requested bandwidth;

searching for the path with the minimum cost function value between the source node and the sink node on each wavelength plane according to the network topology information, source node identifier, sink node identifier, and the requested bandwidth, where the network topology information includes wavelength links and logic links, and the cost function value of a logic link is less than the cost function value of any wavelength link in the network; and

selecting the path with the minimum cost function value as the routing path of the current service.

The cost function value of the logic link is in proportion to the wavelength link quantity of the logic link.

The cost function value of the logic link is in proportion to the remaining bandwidth of the logic link.

The process of searching for the path with the minimum cost function value between the source node and the sink node on each wavelength plane according to the network topology information, source node identifier, sink node identifier, and the requested bandwidth includes:

calculating the cost function value of each logic link on each wavelength plane according to the following formula, and using the obtained cost function value of the logic link to update the network topology information:

$$c(l_{mn}^i) = \begin{cases} [\alpha \dfrac{h_{mn}^i}{N} + (1-\alpha)\dfrac{b_l}{C}] \times Min(C(P_{inv}^j)), & b \le b_l \\ +\infty, & b > b_l \end{cases}$$

where, $l_{mn}^i$ represents the logic link from node m to node n, $h_{mn}^i$ represents the wavelength link quantity occupied by the logic link $l_{mn}^i$ whose wavelength plane is $\lambda_j$, N represents the node quantity of the network, C is the bandwidth of

each wavelength link, $\alpha$ is a cost function value coefficient (0<$\alpha$<1), and $Min(C(P_{inv}^j))$ is the minimum cost function value of all wavelength links of all wavelength planes; and

searching for the path with the minimum cost function value from the source node to the sink node on each wavelength plane according to the updated network topology information.

If the cost function value of the path with the minimum cost function value is not infinitely great, the method further includes:

creating a logic link on the wavelength link of the current service routing path;

deleting the wavelength link corresponding to the newly created logic link on the current service routing path;

assigning the bandwidth of the wavelength link to the newly created logic link; and
detracting the requested bandwidth from the remaining bandwidth of all logic links on the current service routing path.

After the current service routing path is determined, the method further comprises:

receiving a service release request message, which includes a source node identifier, a sink node identifier, and requested bandwidth;
adding the remaining bandwidth of the logic link on the path from the source node to the sink node to the requested bandwidth; and
restoring the logic link to the wavelength link if the remaining bandwidth of the logic link on the path from the source node to the sink node is equal to the wavelength link bandwidth.

A routing path determining unit disclosed in an embodiment of the present invention includes:

a receiving unit, adapted to receive a service request message, which includes a source node identifier, a sink node identifier, and requested bandwidth;
a path determining unit, adapted to: search for the path with the minimum cost function value between the source node and the sink node on each wavelength plane according to the network topology information, source node identifier, sink node identifier, and the requested bandwidth; and select the path with the minimum cost function value as the routing path of the current service, wherein the network topology information includes wavelength links and logic links, and the cost function value of a logic link is less than the cost function value of any wavelength link in the network.

The path determining unit includes:
a calculating unit, adapted to calculate the cost function value of each logic link on each wavelength plane according to the following formula:

$$c(l_{mn}^i) = \begin{cases} [\alpha \dfrac{h_{mn}^i}{N} + (1-\alpha) \dfrac{b_l}{C}] \times Min(C(P_{uv}^i)), & b \le b_l \\ +\infty, & b > b_l \end{cases}$$

where, $l_{mn}^i$ represents the logic link from node m to node n, $h_{mn}^i$ represents the wavelength link quantity occupied by

the logic link $\lambda_i$ whose wavelength plane is $l_{mn}^i$, N represents the node quantity of the network, C is the bandwidth of

each wavelength link, $\alpha$ is a cost function value coefficient (0<$\alpha$<1), and $Min(C(P_{uv}^i))$ is the minimum cost function value of all wavelength links of all wavelength planes;
a cost function value updating unit, adapted to update the network topology information according to the cost function value of the logic link obtained by the calculating unit; and
a path obtaining unit, adapted to search for the path with the minimum cost function value from the source node to the sink node on each wavelength plane according to the network topology information updated by the updating unit, and select the path with the minimum cost function value as the routing path of the current service.
The routing path determining unit further includes a topology information updating unit, adapted to delete the wavelength link on the current service routing path when the cost function value of the path with the minimum cost function value is not infinitely great, and subtract the requested bandwidth from the remaining bandwidth of the logic link on the current service routing path.
Therefore, by preferring the logic link and taking the impact caused by the available bandwidth and the quantity of wavelength links in the existing logic links onto routing into consideration, the bandwidth resources of the network are utilized efficiently.

BRIEF DESCRIPTION OF THE DRAWINGS

Figure 1 is a flowchart of a routing algorithm according to an embodiment of the present invention;

Figure 2(a) is an exemplary physical topology view of the network according to an embodiment of the present invention;

Figure 2(b) is an exemplary initial hierarchy of the network according to an embodiment of the present invention;

Figure 2(c) is an exemplary hierarchy after the network accepts a service connection request r1 according to an embodiment of the present invention;

Figure 2(d) is an exemplary hierarchy of the $\lambda_1$ after the network accepts a service connection request r2 according to an embodiment of the present invention;

Figure 2(e) is an exemplary hierarchy of the $\lambda_2$ after the network accepts a service connection request r3 according to an embodiment of the present invention;

Figure 3 is a physical topology view of an NSF Network backbone network for emulation according to an embodiment of the present invention;

Figure 4 shows the impact caused by different $\alpha$ values onto the network congestion ratio according to an embodiment of the present invention;

Figure 5 shows the quantity of logic links occupied by the service request when the $\alpha$ value is 0.1, 0.5 and 0.9 respectively according to an embodiment of the present invention;

Figure 6 shows the quantity of wavelength links occupied by the service when the $\alpha$ value is 0.1, 0.5 and 0.9 respectively according to an embodiment of the present invention;

Figure 7 shows the network bandwidth utilization ratio when the $\alpha$ value is 0.1, 0.5 and 0.9 respectively according to an embodiment of the present invention;

Figure 8 shows the network bandwidth utilization ratio when algorithm is MCTLN under the present invention, and MinTH and MinLP under the prior art respectively; and

Figure 9 shows the routing path determining unit according to an embodiment of the present invention.

DETAILED DESCRIPTION

In order to facilitate those skilled in the art to understand and implement the present invention, the present invention is described below with reference to accompanying drawings and embodiments.

The present invention puts forward a method for determining a routing path in an IP-over-WDM optical Internet - Minimizing the Cost of Total Lightpaths in Network (MCTLN). The essence of the algorithm is: in an IP-over-WDM optical Internet, it is necessary not only to consider the WDM layer routing, but also to consider the IP layer routing. The logic link referred to herein is an optical path. According to the embodiments of the present invention, a logic link already created is preferred for bearing IP service streams. In the process of selecting a logic link, the logic link which has less remaining bandwidth and occupies less wavelength links is preferred. In this way, the wavelength link resources are saved as far as possible, and the utilization ratio of the network bandwidth resources is improved. Moreover, this helps create services of a high bandwidth and reduce the service congestion ratio.

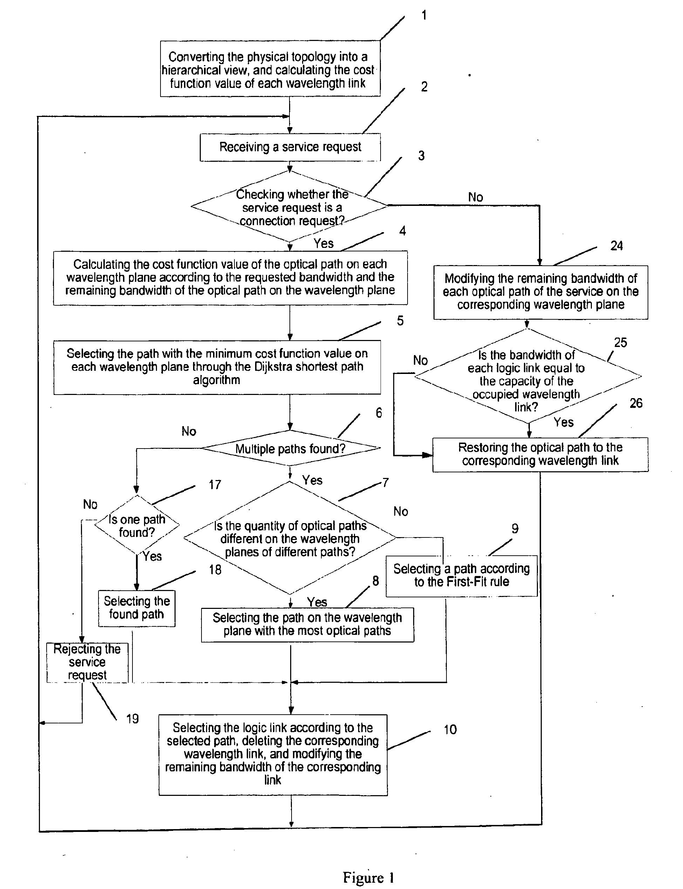

The method for determining a routing path in an embodiment of the present invention is described below by reference to Figure 1.

Step 1: The physical topology of a given optical network is converted to several non-adjacent wavelength planes according to the wavelength collection provided by the fiber, a hierarchical topology view is constructed, and the cost function value of each wavelength link is initialized.

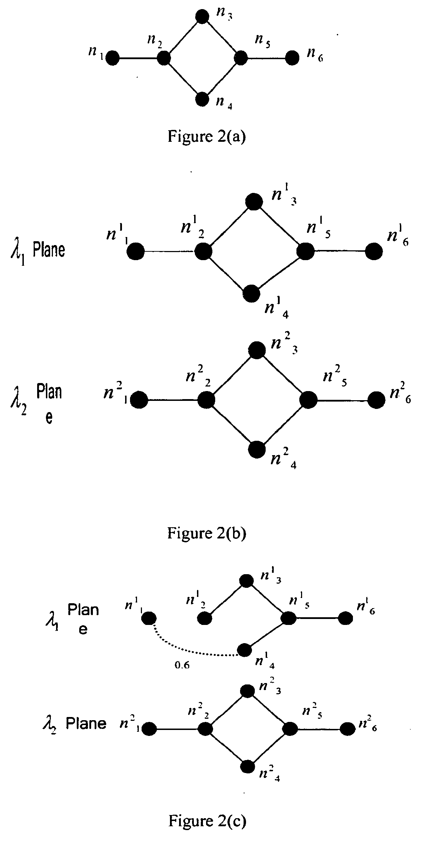

The physical topology of the network is represented by G (N, L, F, W), where N represents a node collection, L represents a bidirectional link collection, F is a fiber collection on each link, and W is the available wavelength collection on each fiber. Suppose that each link consists of a pair of unidirectional fibers which are in mutually reversed directions. Each fiber provides $|W|$ wavelengths. The node quantity is represented by |N| and the link quantity is represented by |L|. Figure 2 (a) shows a physical topology view, where |N|=6, |L|=6, F is a single fiber, and $|W|$ =2. On the physical topology G (N, L, F, W) shown in Figure 2 (a), a hierarchical topology view shown in Figure 2(b) may be constructed. Two wavelength plane charts ($\lambda_1$, plane and $\lambda_2$ plane) exist in the hierarchical topology view. In G (N, L, F, W), each $N_k \in N$ is replicated once in each wavelength plane view. Every link $l_{mn} \in L$ is mapped to each wavelength plane, and each wavelength link corresponds to a wavelength of a fiber in the physical topology.

The links in each wavelength plane in an embodiment of the present invention come in two types: wavelength link and logic link. The wavelength link $p_{mn}^i \in L$ represents the wavelength path between node m and node n on the $\lambda_i$ wavelength plane, namely, the wavelength path corresponding to $\lambda_i$ between two adjacent nodes in the physical topology G; logic link $l_{mn}^i$ represents a logic link between any two nodes m and n in the physical topology G. The logic link uses the wavelength $\lambda_j$. Creation of a logic link necessarily occupies a wavelength link. Therefore, after a logic link is created, the wavelength link occupied by the logic link must be removed in the hierarchical topology view. When all logic links on the wavelength link are removed, the wavelength link occupied by the logic link is restored in the topology view of the $\lambda_j$ wavelength plane.

After the hierarchical topology view is created, the cost function value of each wavelength link on each wavelength plane can be calculated according to formula (1).

$$C(P_{mn}^i) = \begin{cases} \Delta_{mn}, & \text{when } \sum_i \sum_j f_{mn}^{pq,i} = 0 \\ +\infty, & \text{when } \sum_i \sum_j f_{mn}^{pq,i} = 1 \end{cases} \tag{1}$$

In formula (1), $f_{mn}^{pq,i}$ indicates the scenario of the wavelength link $p_{mn}^i$ occupied by the logic link $l_{pq}^i$ on the wavelength plane. If $f_{mn}^{pq,i} = 1$, it indicates that the wavelength link $p_{mn}^i$ of nodes m and n on the $\lambda_i$ wavelength plane is occupied by the logic link $l_{pq}^i$. In this case, $C(P_{mn}^i) = +\infty$ indicates that the wavelength link is occupied and its resources have been transferred to the logic link. If $f_{mn}^{pq,i} = 0$, =0, namely, the wavelength link is not in use. Then, the cost function value is a value decided by multiple factors (for example, the physical length of the wavelength link and the cost of constructing the wavelength link). In this case, for the wavelength link $p_{mn}^i$, its cost function value $C(P_{mn}^i)$ may be decided by multiple factors (for example, physical length and/or construction cost). In an embodiment of the present invention, the value of the $C(P_{mn}^i)$ does not affect the effect of the present invention. Therefore, all wavelength links on all wavelength planes may be set to the same value such as 1.

Step 2: The IP service request message (hereinafter referred to as service request message) is received, where the service request message includes a connection request message and a release request message. The service connection request message is represented by r (s, d, b), where s is the source node identifier and d is the sink node identifier carried by the service request message, and b is requested bandwidth. The service release request is represented by $rl_1$ (s, d, b), where s is the source node identifier and d is the sink node identifier carried by the service request message, and b is requested bandwidth.

Step 3: A judgment is made on whether the type of the service request message is a connection request. If so, the process proceeds to Step 4; otherwise, the process proceeds to Step 24.

Step 4: The cost function value $c(l_{mn}^i)$ of each logic link on each wavelength plane is calculated through formula (2) according to the requested bandwidth b and the remaining bandwidth $b_1$ of the logic link on the wavelength plane, when the service request message is a connection request message.

$$c(l_{mn}^i) = \begin{cases} [\alpha \dfrac{h_{mn}^i}{N} + (1-\alpha)\dfrac{b_l}{C}] \times Min(C(P_{uv}^i)), & b \le b_l \\ +\infty, & b > b_l \end{cases} \tag{2}$$

In formula (2), $h_{mn}^i$ represents the quantity of wavelength links occupied by the logic link $l_{mn}^i$ whose wavelength

is $\lambda_1$, N is the quantity of the network nodes, C is the bandwidth of each wavelength link, $\alpha$ is a cost function value coefficient ($0<\alpha<1$) and is used to adjust the weight of the remaining bandwidth and the quantity of occupied wavelength links among the logic links in the process of routing, and $Min(C(P_{uv}^{l}))$ is the minimum cost function value of all wavelength links on all wavelength planes in the current network status.

Formula (2) shows that, when the requested bandwidth b is greater than the remaining bandwidth $b_l$ of the current logic link, namely, $b \leq b_l$, $c(l_{mn}^{l})$ is $+\infty$. That is to say, for the current service request, the logic link is unavailable.

Formula (2) reveals that, when the requested bandwidth b is less than or equal to the remaining bandwidth $b_l$ of the current logic link, namely, $b \leq b_l$, $c(l_{mn}^{l})$ is $[\alpha \dfrac{h_{mn}^{l}}{N} + (1-\alpha)\dfrac{b_l}{C}] \times Min(C(p_{uv}^{l}))$. In this case, because

the $\alpha \dfrac{h_{mn}^{l}}{N} + (1-\alpha)\dfrac{b_l}{C}$ is less than 1, the $[\alpha \dfrac{h_{mn}^{l}}{N} + (1-\alpha)\dfrac{b_l}{C}] \times Min(C(p_{uv}^{l}))$ is less than

$Min(C(p_{uv}^{l}))$, namely, the $[\alpha \dfrac{h_{mn}^{l}}{N} + (1-\alpha)\dfrac{b_l}{C}] \times Min(C(p_{uv}^{l}))$ is less than the cost function value of all wavelength links of all wavelength planes in the current network state. That is to say, the cost function value of any logic link is less than the cost function value of all wavelength links of all wavelength planes in the current network state. Therefore, so long as both wavelength link and logic link coexist between two nodes, the logic link is preferred according to the rule of selecting the path of the minimum cost function value. That is to say, the created logic link is preferred as the routing path of the current service.

In the $\alpha \dfrac{h_{mn}^{l}}{N} + (1-\alpha)\dfrac{b_l}{C}$ polynomial, a proper $\alpha$ value may be selected to balance the remaining bandwidth in the logic link and the weight of the logic link among the wavelength link quantity. If $0>\alpha>1$, both the remaining bandwidth and the wavelength link need to be considered. With the increase of the $\alpha$ value, the weight of the wavelength link on each logic link from the source node to the sink node increases gradually, and the weight of the remaining bandwidth decreases gradually. If $\alpha$ is equal to 1, the remaining bandwidth is disregarded in each logic link from the source node to the sink node, and the link with the least logic link quantity is preferred as the routing path of the current service according to the rule of selecting the path of the minimum cost function value, namely, in the routing process, the logic link that occupies less wavelength links is preferred in order to save resources. If $\alpha$ is equal to 0, among all the logic links from the source node to the sink node, the wavelength link quantity is disregarded, and the link with the minimum remaining bandwidth is preferred as the routing path of the current service according to the rule of selecting the path with the minimum cost function value. In this way, the possibility for the subsequent service request with a higher requested bandwidth to find an available logic link increases. Therefore, according to $\alpha \dfrac{h_{mn}^{l}}{N} + (1-\alpha)\dfrac{b_l}{C}$, the logic link which has less remaining bandwidth and a lower wavelength link quantity among the logic links is selected as the routing path of the current service. A proper $\alpha$ value may be selected to adjust the weight of the remaining bandwidth and the quantity of occupied wavelength links among the logic links. Therefore, a proper logic link is selected as the routing path of the current service.

Step 5: On each wavelength plane, the Dijkstra algorithm may be used to find the path which has the minimum cost function value - $P_k$. Alternatively, other algorithms (such as Bellman-Ford algorithm) may be used to find the path with the minimum cost function value, and then the paths with the minimum cost function value ($P_k$) found on all wavelength planes are compared, and the path with the minimum cost function value ($P_k$) is selected.

Step 6: A judgment is made on whether more than one path with the minimum cost function value is found; if found, the process proceeds to Step 7; otherwise, the process proceeds to Step 17.

Step 7: If more than one path with the minimum cost function value ($P_k$) is found, a judgment is made on whether the quantity of logic links included in each path is equal; if equal, the process proceeds to Step 9; otherwise, the process proceeds to Step 8.

Step 8: The path with the most logic links is selected as the routing path of the current service, and then the process proceeds to Step 10.

Step 9: Among multiple paths with the minimum cost function value ($P_k$), a path is selected as the routing path of the current service according to the First-fit rule; or any path is selected as the routing path of the service and the corresponding bandwidth resources are allocated, and then the process proceeds to Step 10.

Step 10: A logic link is created according to the path selected for the current service in Step 8 or Step 9, namely, the wavelength link traversed on the path in the physical topology view is deleted, a logic link corresponding to the wavelength link is created, and the available bandwidth of the newly created logic link and the already created logic link on the current service path is modified. That is to say, the available bandwidth of the newly created logic link on the current service path is changed to the wavelength link bandwidth minus requested bandwidth, and the available bandwidth of the already created logic link on the current service path is changed to the original available bandwidth minus the requested bandwidth, and then the process returns to Step 2 where the next service request message is received.

Step 17: If not more than one path is found, a judgment is made on whether a path with the minimum cost function value is found. If found, the process proceeds to Step 18; otherwise, the process proceeds to Step 19.

Step 18: This path is used as a routing path of the current service, and then the process proceeds to Step 10.

Step 19: The service connection request is rejected, and then the process returns to Step 2, where the next service request message is received.

Step 24: The available bandwidth of the logic link that bears the service is modified to the original available bandwidth plus the requested bandwidth if the service request is a release request message.

Step 25: A judgment is made on whether the available bandwidth of each logic link that bears the release request is equal to the bandwidth of the wavelength link. If equal, the process proceeds to Step 26; otherwise, the process returns to Step 2, in which the next service request message is received.

Step 26: If the available bandwidth of the logic link which bears the release request message and exists between the source node and the sink node is equal to the bandwidth of the wavelength link, it indicates that the logic link bears no service and needs to be released. In this case, the wavelength link occupied by the logic link needs to be restored on the hierarchical view corresponding to the logic link.

The present invention needs to run the Dijkstra shortest path algorithm on $|W|$ wavelength planes respectively. The calculation complexity of the Dijkstra shortest path algorithm is $O(N^2)$. In this way, for the IP-over-WDM optical Internet with N nodes, the calculation complexity of the MCTLN algorithm is $O(|W|N^2)$.

### Embodiment 1

If three service connection request messages ($r_1, r_2, r_3,$) are received and one service release request message ($rl_1$) is received, the routing method under the present invention is described below. At the beginning, no logic link exists, the cost function value of each wavelength link is $\Delta_{mn}$. For ease of description, it is supposed that $\Delta_{mn} = 1$.

The received service connection request message is $r_1$ ($n_1, n_4,$ 0.4). The cost function value of the logic link on each wavelength plane may be calculated through formula (2) according to the requested bandwidth (which is 0.4) of the connection request and the remaining bandwidth (which is 1) of the logic link on the wavelength plane.

On each wavelength plane of the hierarchical topology view, the path with the minimum cost function value ($P_k$) on each wavelength plane is found through a Dijkstra shortest path algorithm; on the $\lambda_1$ wavelength plane of the hierarchical view shown in Figure 2(b), the shortest path $(n_1^1, n_2^1, n_4^1)$ is found for the connection request message $r_1(n_1, n_4,$ 0.4) of the current service. On the $\lambda_2$ wavelength plane, the shortest path $(n_1^2, n_2^2, n_4^2)$ is found. Since two shortest paths are found, a path may be selected according to the First-Fit rule, or selected randomly, as a path of the current service. In the foregoing two wavelength planes, the cost function value of the two found shortest paths is 2, and the logic link quantity on the wavelength plane $\lambda_1, \lambda_2$ that contains the two paths is 0. According to the First-Fit rule, the shortest path $(n_1^1, n_2^1, n_4^1)$ on the $\lambda_1$ wavelength plane is selected, and new logic link $(n_1^1, n_4^1)$ is created on the $\lambda_1$ wavelength plane.

On the $\lambda_1$ wavelength plane, a new logic link $(n_1^1, n_4^1)$ is created. The wavelength links $(n_1^1, n_2^1)$ and $(n_2^1, n_4^1)$ traversed by the logic link are deleted. The bandwidth capacity of each wavelength link is 1, so the bandwidth capacity of the wavelength link is occupied by the logic link after the logic link is created. Therefore, the bandwidth capacity of the logic link $(n_1^1, n_4^1)$ is 1. The requested bandwidth for the service connection on the logic link is 0.4, so the available bandwidth of the logic link is 1-0.4=0.6 (as shown in Figure 2(c)).

The new service connection request $r_2(n_1, n_5,$ 0.2) arrives.

The cost function value of the logic link is calculated. In this case,

$$C(l_{14}^1) = [\ \alpha \frac{h_{14}^1}{N} + (1-\alpha)\frac{b_l}{C}\ ] \times Min(C(P_{inv}^j)) = 0.267\ (\alpha = 0.5).$$

A path is searched out on the two wavelength planes $\lambda_1, \lambda_2$ through the Dijkstra shortest path algorithm. As shown in Figure 2(c), if the path with the minimum cost function value is $(l_{14}^1,\ P_{45})$, which is the shortest path on the wavelength plane $\lambda_1$. $P_{45}$ is changed to the logic link $l_{45}^1$. The logic links $l_{14}^1$ and $l_{45}^1$ bear the request $r_2$.

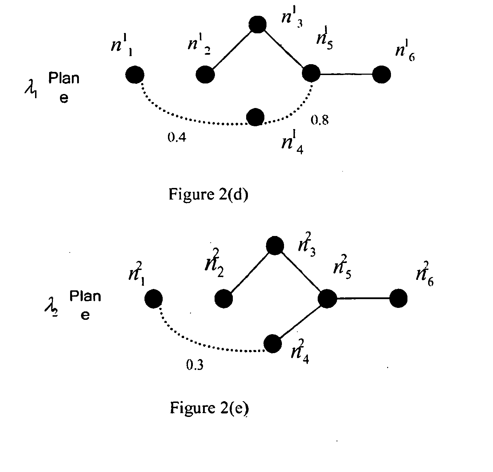

The wavelength link $(n_4^1, n_5^1)$ on the $\lambda_1$ is deleted. The remaining bandwidth of the logic link $l_{14}^1$ is changed to 0.6-0.2=0.4, and the remaining bandwidth of the logic link $l_{45}^1$ is changed to 1-0.2=0.8. In this case, the $\lambda_1$ hierarchical view is shown in Figure 2(d), and the hierarchical topology view of $\lambda_2$ is unchanged. More service request messages are awaited.
The new service connection request message $r_3$ ($n_1$, $n_4$, 0.7) arrives.
The cost value of the logic link is calculated. In this case,

$$C(l_{14}^1) = +\infty,\ C(l_{45}^1) = [\ \alpha \frac{h_{45}^1}{N} + (1-\alpha)\frac{b_l}{C}\ ] \times Min(C(P_{inv}^j)) = 0.433,\ (\alpha = 0.5).$$

A path is searched out on the two wavelength planes $\lambda_1, \lambda_2$ through the Dijkstra shortest path algorithm. The path with the minimum cost function value $(n_1^2, n_2^2, n_4^2)$ is found on the wavelength plane of $\lambda_2$ in Figure 2(b). The path consists of the wavelength link $(n_1^2, n_2^2)$ and $(n_2^2, n_4^2)$. A new logic link $l_{14}^2$ is created for the service connection request through the two wavelength links, and the logic link $l_{14}^2$ bears the request $r_3$.

The two wavelength links $(n_1^2, n_2^2)$ and $(n_2^2, n_4^2)$ on the $\lambda_2$ wavelength plane are deleted. The remaining bandwidth of the logic link $l_{14}^2$ is changed to 1-0.7=0.3. In this case, the hierarchical view of $\lambda_2$ is shown in Figure 2(e), and the hierarchical view of $\lambda_1$ is unchanged. More service request messages are awaited.
The service release request message $rl_1$ ($n_1$, $n_4$, 0.4) arrives.
This message requests to release the resource created according to the service connection request message $r_1(n_1, n_4, 0.4)$. The logic link created for $r_1(n_1, n_4, 0.4)$ is $(n_1^1, n_4^1)$, the remaining bandwidth of $(n_1^1, n_4^1)$ is added to 0.4, and the remaining bandwidth of $(n_1^1, n_4^1)$ changes to 0.8. More service request messages are awaited.

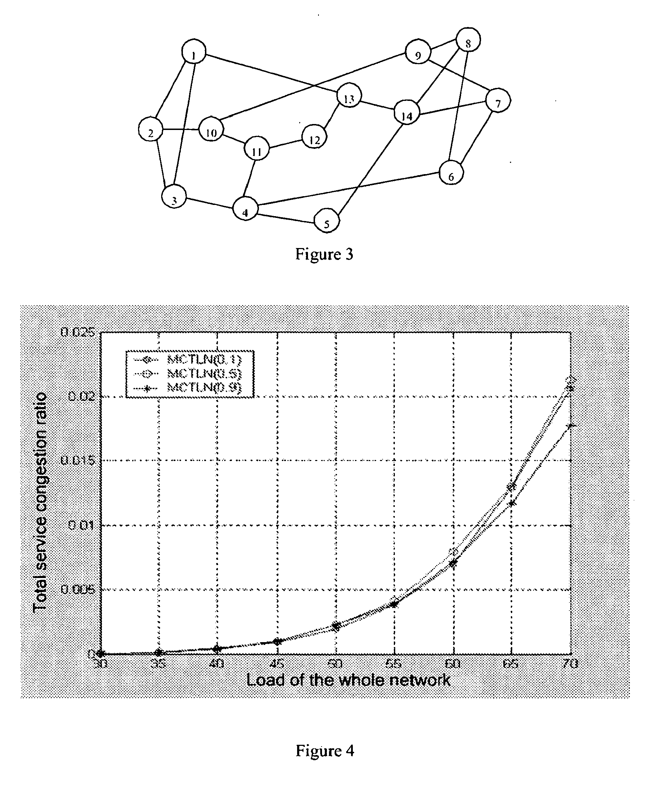

In order to verify the validity of the routing algorithm under the present invention, a computer emulation verification is implemented.
For better comparison and analysis, the emulation topology adopts a backbone NSF Network, which consists of 14 nodes and 21 links in total. All nodes lack the wavelength conversion capability, and observe the wavelength consistency, as shown in Figure 3.
The conditions set for computer emulation in an embodiment of the present invention are: in a physical topology of the optical network, each link consists of a pair of unidirectional fibers which lead to mutually reversed directions; each fiber supports four wavelengths, and the bandwidth capacity of each wavelength link is unified to 1; the requested bandwidth of the service request obeys the rule of equal distribution U (0, 1); in the NSF Network, the source node and sink node of the arrived request message are selected among node 1 to node 9 randomly; suppose that all connection request messages r (s, d, b) arrive in a Poisson process with the arrival rate of β , the duration of the created connection obeys the exponential distribution with the mean value 1/μ; and in the emulation, it is supposed that μ = 1. Multiple service connections may coexist between a pair of nodes. A logic link needs to be created for each arrived request. If the link creation fails, the request is rejected. Once the request is rejected, it is discarded, namely, no waiting queue exists.

Figure 4 shows the impact caused by different α values onto the network congestion ratio. In the emulation experiment, the congestion ratio is defined as: congestion ratio = quantity of discarded connection requests / quantity of total connection requests. Figure 4 reveals that:

(1) the network congestion ratio increases with the increase of the network load; and
(2) when the service arrival ratio is the same, if α = 0.5, the congestion ratio is highest.

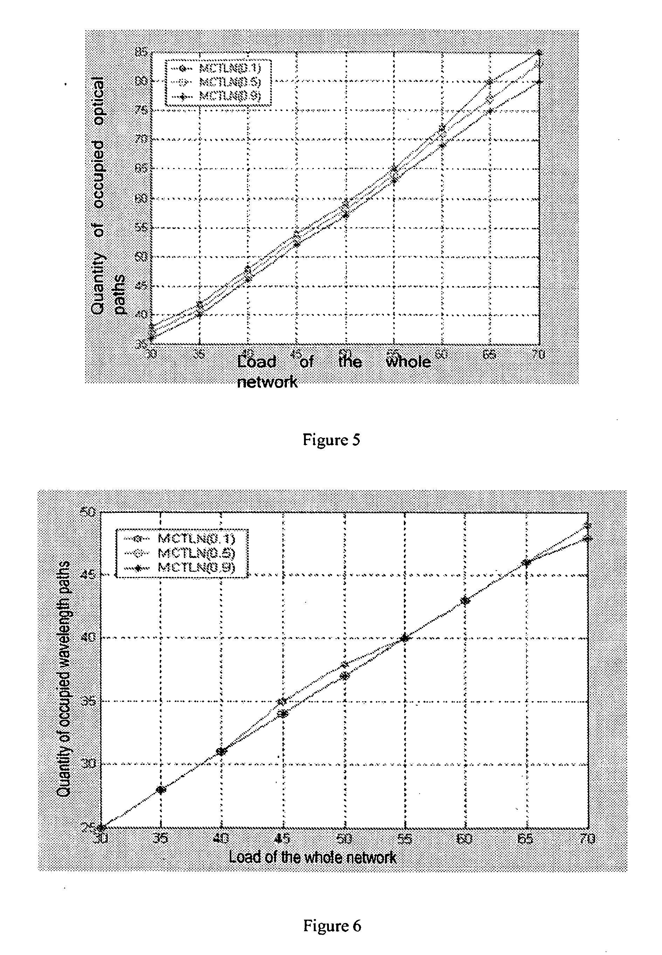

Figure 5 shows the quantity of logic links occupied by the service request when the α value is 0.1, 0.5 and 0.9 respectively. Figure 5 reveals that: when the network load is the same, with the change of the α value, the quantity of occupied logic links increases; when α = 0.1, the quantity of occupied logic links is the maximal; when α = 0.5, the quantity of occupied logic links takes the second place; when α = 0.9, the quantity of occupied logic links is the minimal. In other words, when α = 0.1, the quantity of newly created optical paths is maximal; when α = 0.5, the quantity of newly created optical paths takes the second place; when α = 0.9, the quantity of newly created optical paths is minimal.

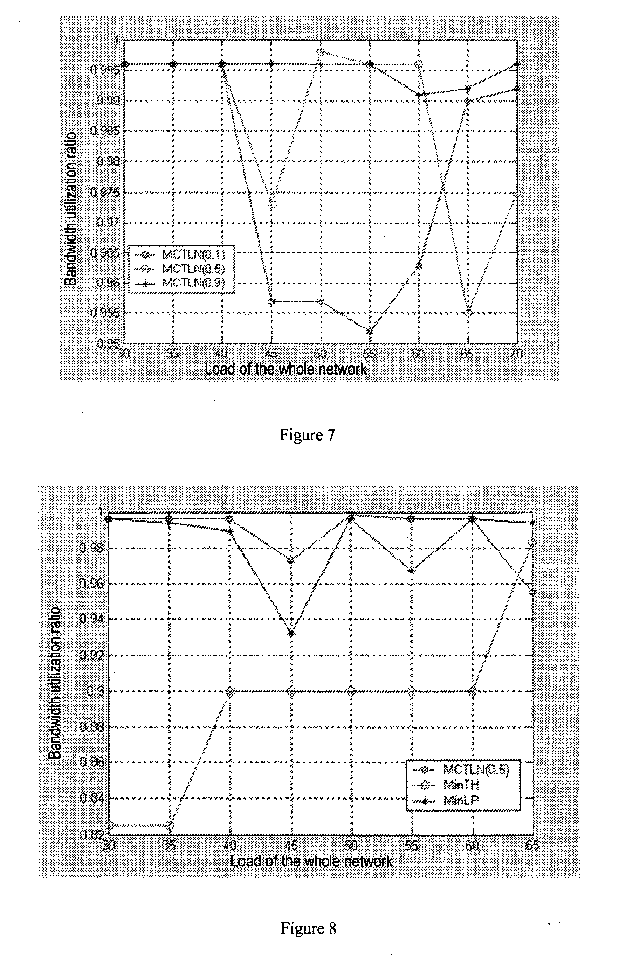

Figure 6 shows the quantity of wavelength links occupied by the service when α is 0.1, 0.5 and 0.9 respectively. The emulation result of Figure 7 reveals that: when α is equal to 0.1,0.5 and 0.9 respectively, the quantity of occupied wavelength links remains almost the same.

Figure 7 shows the network bandwidth utilization ratio when α is equal to 0.1, 0.5 and 0.9 respectively. Figure 7 reveals that, if the network load is low, the bandwidth utilization ratio is the same, when the α value is 0.1, 0.5, 0.9 respectively. However, with the increase of the network load, the bandwidth utilization ratio remains basically steady when α is equal to 0.1, and the curve fluctuates irregularly to a great extent when α is equal to 0.5 and 0.9 respectively. No obvious rule can be found.

Figure 8 shows the network bandwidth utilization ratio in the case of three algorithms (MCTLN, MinTH, and MinLP). In the emulation experiment, the bandwidth utilization ratio is defined as: bandwidth utilization ratio = bandwidth occupied by all services / bandwidth of all logic links. Figure 8 reveals that the bandwidth utilization ratio of the MCTLN is the highest, and the bandwidth utilization ratio of the MinTH is the lowest.

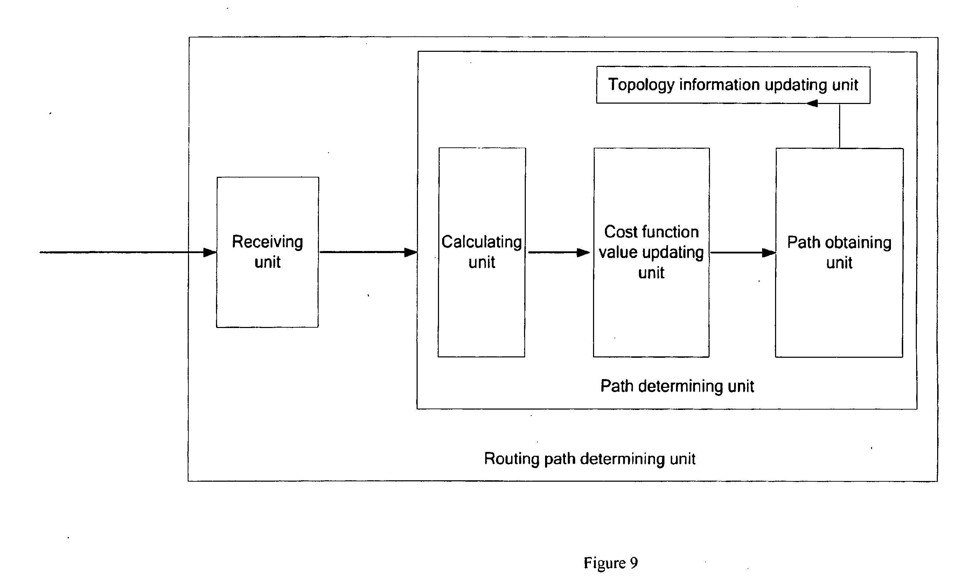

As shown in Figure 9, a routing path determining unit disclosed in an embodiment of the present invention includes:

a receiving unit, adapted to receive a service request message, where the service connection request message includes a source node identifier, a sink node identifier and requested bandwidth; and
a path determining unit, adapted to: search for the path with the minimum cost function value between the source node and the sink node on each wavelength plane according to the network topology information that includes wavelength links and logic links as well as the requested bandwidth; and select the path with the minimum cost function value as a routing path of the current service, where the cost function value of a logic link is less than that of any wavelength link in the network.

The path determining unit includes:

a calculating unit, adapted to calculate the cost function value of each logic link on each wavelength plane according to the following formula:

$$c(l_{mn}^i) = \begin{cases} [\alpha \dfrac{h_{mn}^i}{N} + (1-\alpha) \dfrac{b_l}{C}] \times Min(C(P_{uv}^i)), & b \le b_l \\ +\infty, & b > b_l \end{cases}$$

where, $l_{mn}^i$ represents the logic link from node m to node n, $h_{mn}^i$ is the quantity of wavelength links occupied by the logic link $l_{mn}^i$ of $\lambda_i$ on the wavelength plane, N is the quantity of network nodes, C is the bandwidth capacity of

each wavelength link, $\alpha$ is a cost function value coefficient (0<$\alpha$<1), and $Min(C(P_{uv}^i))$ is the minimum cost function value of all wavelength links of all wavelength planes;

a cost function value updating unit, adapted to update the network topology information according to the cost function value of the logic link obtained by the calculating unit;

a path obtaining unit, adapted to search for the path with the minimum cost function value from the source node to the sink node on each wavelength plane according to the network topology information updated by the updating unit, and select the path with the minimum cost function value as a routing path of the current service; and

a topology information updating unit, adapted to delete the wavelength link on the routing path of the current service when the cost function value of the path with the minimum cost function value is infinitely great, and subtract the requested bandwidth from the remaining bandwidth of the logic link on the routing path of the current service.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

**Claims**

1.  A method for determining a routing path, comprising:

    receiving a service connection request message, which comprises a source node identifier, a sink node identifier, and requested bandwidth (2); **characterised by**:

    searching for a path with a minimum cost function value between a source node and a sink node on each wavelength plane according to network topology information, the source node identifier, the sink node identifier, and the requested bandwidth, wherein the network topology information comprises wavelength links and logic links, and the cost function value of a logic link is less than the cost function value of any wavelength link in a network (7); and
    selecting the path with the minimum cost function value as a routing path of a current service (8);
    wherein the process of searching for the path with the minimum cost function value between the source node and the sink node on each wavelength plane according to the network topology information, source node identifier, sink node identifier, and the requested bandwidth comprises: when the requested bandwidth is less than or equal to remaining bandwidth of a current logic link, calculating the cost function value of each logic link on each wavelength plane according to the following formula, and using the obtained cost function value of the logic link to update the network topology information:

$$c(l_{mn}^i) = [\alpha \frac{h_{mn}^i}{N} + (1-\alpha)\frac{b_l}{C}] \times Min(C(p_{uv}^i))$$

    where, $c(l_{mn}^i)$ represents the cost function value of each logic link on each wavelength plane, $l_{mn}^i$ represents the logic link from node m to node n, and $h_{mn}^i$ represents a quantity of wavelength links occupied by the logic link $l_{mn}^i$ whose wavelength is $\lambda_i$, N is a quantity of network nodes, C is bandwidth of each wavelength link, $\alpha$ is a cost function value coefficient (0<$\alpha$<1), $b_l$ represents the remaining bandwidth of the current logic link and $Min(C(P_{uv}^i))$ is a minimum cost function value of all wavelength links of all wavelength planes; and
    searching for the path with the minimum cost function value from the source node to the sink node on each wavelength plane according to the updated network topology information.

2. The method of claim 1, wherein after determining the current service routing path, the method further comprises:

   receiving a service release request message, which comprises a source node identifier, a sink node identifier, and requested bandwidth; and

   adding the requested bandwidth to the remaining bandwidth of the logic link on the path between the source node and the sink node.

3. The method of claim 2, wherein the logic link is restored to the wavelength link if the remaining bandwidth of the logic link on the path from the source node to the sink node is equal to wavelength link bandwidth.

4. A routing path determining unit, comprising:

   a receiving unit, adapted to receive a service request message, which comprises a source node identifier, a sink node identifier, and requested bandwidth; **characterised by**:

   a path determining unit, adapted to: search for a path with a minimum cost function value between a source node and a sink node on each wavelength plane according to network topology information, the source node identifier, the sink node identifier, and the requested bandwidth; and select the path with the minimum cost function value as a routing path of a current service, wherein the network topology information comprises wavelength links and logic links, and the cost function value of a logic link is less than the cost function value of any wavelength link in a network;
   wherein the path determining unit comprises:
   a calculating unit, adapted to calculate the cost function value of each logic link on each wavelength plane according to the following formula, when the requested bandwidth is less than or equal to remaining bandwidth of a current logic link:

   $$c(l_{mn}^i) = [\alpha \frac{h_{mn}^i}{N} + (1-\alpha)\frac{b_l}{C}] \times Min(C(p_{uv}^i))$$

   where, $c(l_{mn}^i)$ represents the cost function value of each logic link on each wavelength plane, $l_{mn}^i$ represents the logic link from node m to node n, and $h_{mn}^i$ represents a quantity of wavelength links occupied by the logic link $l_{mn}^i$ whose wavelength is $\lambda_i$, N is a quantity of network nodes, C is bandwidth of each wavelength link, $\alpha$

   is a cost function value coefficient ($0 < \alpha < 1$), $b_l$ represents the remaining bandwidth of the current logic link and

   $Min(C(P_{uv}^i))$ is a minimum cost function value of all wavelength links of all wavelength planes;

   a cost function value updating unit, adapted to update the network topology information according to the cost function value of the logic link obtained by the calculating unit; and
   a path obtaining unit, adapted to search for the path with the minimum cost function value from the source node to the sink node on each wavelength plane according to the network topology information updated by the updating unit, and select the path with the minimum cost function value as the routing path of the current service.

5. An IP-over-WDM optical internet, comprising a routing path determining unit according to claim 4.

**Patentansprüche**

1. Verfahren zur Bestimmung eines Routing-Pfads, mit den folgenden Schritten:

   Empfangen einer Dienstverbindungs-Anforderungsnachricht, die eine Quellenknotenkennung, eine Senkenknotenkennung und eine angeforderte Bandbreite (2) umfasst; **gekennzeichnet durch**:

Suchen nach einem Pfad mit einem minimalen Kostenfunktionswert zwischen einem Quellenknoten und einem Senkenknoten auf jeder Wellenlängenebene gemäß Netztopologieinformationen, der Quellenknotenkennung, der Senkenknotenkennung und der angeforderten Bandbreite, wobei die Netztopologieinformationen Wellenlängenstrecken und logische Strecken umfassen und der Kostenfunktionswert einer logischen Strecke kleiner als der Kostenfunktionswert jeder Wellenlängenstrecke in einem Netz (7) ist; und Wählen des Pfads mit dem minimalen Kostenfunktionswert als einen Routing-Pfad eines aktuellen Dienstes (8);

wobei der Prozess des Suchens nach dem Pfad mit dem minimalen Kostenfunktionswert zwischen dem Quellenknoten und dem Senkenknoten auf jeder Wellenlängenebene gemäß den Netztopologieinformationen, der Quellenknotenkennung, der Senkenknotenkennung und der angeforderten Bandbreite Folgendes umfasst: wenn die angeforderte Bandbreite kleiner oder gleich verbleibender Bandbreite einer aktuellen logischen Strecke ist, Berechnen des Kostenfunktionswerts jeder logischen Strecke auf jeder Wellenlängenebene gemäß der folgenden Formel und Verwenden des erhaltenen Kostenfunktionswerts der logischen Strecke, um die Netztopologieinformationen zu aktualisieren:

$$c(l_{mn}^i) = [\alpha \frac{h_{mn}^i}{N} + (1-\alpha)\frac{b_l}{C}] \times Min(C(p_{uv}^i))$$

wobei $c(l_{mn}^i)$ den Kostenfunktionswert jeder logischen Strecke auf jeder Wellenlängenebene repräsentiert, $l_{mn}^i$ die logische Strecke von Knoten m zu Knoten n repräsentiert und $h_{mn}^i$ eine Quantität von Wellenlängenstrecken repräsentiert, die von der logischen Strecke $l_{mn}^i$ eingenommen wird, deren Wellenlänge $\lambda_i$ ist, N eine Quantität von Netzknoten ist, C die Bandbreite jeder Wellenlängenstrecke ist, $\alpha$ ein Kostenfunktionswert-Koeffizient ($0<\alpha<1$) ist, $b_l$ die verbleibende Bandbreite der aktuellen logischen Strecke repräsentiert und $Min(C(P_{uv}^i))$ ein minimaler Kostenfunktionswert aller Wellenlängenstrecken aller Wellenlängenebenen ist; und

Suchen nach dem Pfad mit dem minimalen Kostenfunktionswert von dem Quellenknoten zu dem Senkenknoten auf jeder Wellenlängenebene gemäß den aktualisierten Netztopologieinformationen.

2. Verfahren nach Anspruch 1, wobei das Verfahren nach dem Bestimmen des aktuellen Dienst-Routing-Pfads ferner Folgendes umfasst:

Empfangen einer Dienstfreigabe-Anforderungsnachricht, die eine Quellenknotenkennung, eine Senkenknotenkennung und angeforderte Bandbreite umfasst; und
Addieren der angeforderten Bandbreite zu der übrigen Bandbreite der logischen Strecke auf dem Pfad zwischen dem Quellenknoten und dem Senkenknoten.

3. Verfahren nach Anspruch 2, wobei die logische Strecke auf die Wellenlängenstrecke wiederhergestellt wird, wenn die übrige Bandbreite der logischen Strecke auf dem Pfad von dem Quellenknoten zu dem Senkenknoten gleich der Wellenlängenstreckenbandbreite ist.

4. Routing-Pfad-Bestimmungseinheit, umfassend:

eine Empfangseinheit, die dafür ausgelegt ist, eine Dienstanforderungsnachricht zu empfangen, die eine Quellenknotenkennung, eine Senkenknotenkennung und angeforderte Bandbreite umfasst; **gekennzeichnet durch** eine Pfadbestimmungseinheit, die für Folgendes ausgelegt ist: Suchen nach einem Pfad mit einem minimalen Kostenfunktionswert zwischen einem Quellenknoten und einem Senkenknoten auf jeder Wellenlängenebene gemäß Netztopologieinformationen, der Quellenknotenkennung, der Senkenknotenkennung und der angeforderten Bandbreite; und Auswählen des Pfads mit dem minimalen Kostenfunktionswert als einen Routing-Pfad eines aktuellen Dienstes, wobei die Netztopologieinformationen Wellenlängenstrecken und logische Strecken umfassen und der Kostenfunktionswert einer logischen Strecke kleiner als der Kostenfunktionswert jeder Wellenlängenstrecke in einem Netz ist; wobei die Pfadbestimmungseinheit Folgendes umfasst:

eine Berechnungseinheit, die dafür ausgelegt ist, den Kostenfunktionswert jeder logischen Strecke auf jeder Wellenlängenebene gemäß der folgenden Formel zu berechnen, wenn die angeforderte Bandbreite kleiner oder gleich verbleibender Bandbreite einer aktuellen logischen Strecke ist:

$$c(l_{mn}^i) = [\alpha \frac{h_{mn}^i}{N} + (1-\alpha)\frac{b_l}{C}] \times Min(C(p_{uv}^i))$$

wobei $c(l_{mn}^i)$ den Kostenfunktionswert jeder logischen Strecke auf jeder Wellenlängenebene repräsentiert, $l_{mn}^i$ die logische Strecke von Knoten m zu Knoten n repräsentiert und $h_{mn}^i$ eine Quantität von Wellenlängenstrecken repräsentiert, die von der logischen Strecke $l_{mn}^i$ eingenommen wird, deren Wellenlänge $\lambda_i$ ist,

N eine Quantität von Netzknoten ist, C die Bandbreite jeder Wellenlängenstrecken ist,
$\alpha$ ein Kostenfunktionswert-Koeffizient ($0<\alpha<1$), ist, $b_l$ die verbleibende Bandbreite der aktuellen logischen Strecke repräsentiert und $Min(C(P_{uv}^i))$ ein minimaler Kostenfunktionswert aller Wellenlängenstrecken aller Wellenlängenebenen ist;
eine Kostenfunktionswert-Aktualisierungseinheit, die dafür ausgelegt ist, die Netztopologieinformationen gemäß dem **durch** die Berechnungseinheit erhaltenen Kostenfunktionswert der logischen Strecke zu aktualisieren; und eine Pfaderhaltungseinheit, die dafür ausgelegt ist, nach dem Pfad mit dem minimalen Kostenfunktionswert von dem Quellenknoten zu dem Senkenknoten auf jeder Wellenlängenebene gemäß den **durch** die Aktualisierungseinheit aktualisierten Netztopologieinformationen zu suchen und den Pfad mit dem minimalen Kostenfunktionswert als den Routing-Pfad des aktuellen Dienstes auszuwählen.

5. Optisches IP-über-WDM-Internet, das eine Routing-Pfad-Bestimmungseinheit nach Anspruch 4 umfasst.

## Revendications

1. Procédé permettant de déterminer un trajet d'acheminement, comprenant :

la réception d'un message de demande de connexion à un service, qui comprend un identificateur de noeud source, un identificateur de noeud récepteur et la largeur de bande demandée (2), **caractérisé par** :

la recherche d'un trajet présentant une valeur minimale de fonction de coût entre un noeud source et un noeud récepteur sur chaque plan de longueur d'onde en fonction des informations sur la topologie d'un réseau, de l'identificateur de noeud source, de l'identificateur de noeud récepteur et de la largeur de bande demandée, les informations sur la topologie du réseau comprenant des liaisons de longueurs d'onde dédiées et des liaisons logiques, et la valeur de fonction de coût d'une liaison logique étant inférieure à la valeur de fonction de coût d'une quelconque liaison de longueur d'onde dédiée dans un réseau (7), et la sélection du trajet présentant la valeur minimale de fonction de coût en tant que trajet d'acheminement d'un service en cours (8), dans lequel le processus de recherche du trajet présentant la valeur minimale de fonction de coût entre le noeud source et le noeud récepteur sur chaque plan de longueur d'onde en fonction des informations sur la topologie du réseau, de l'identificateur du noeud source, de l'identificateur du noeud récepteur et de la largeur de bande demandée comprend : lorsque la largeur de bande demandée est inférieure ou égale à la largeur de bande restante d'une liaison logique actuelle, le calcul de la valeur de fonction de coût de chaque liaison logique sur chaque plan de longueur d'onde conformément à la formule qui suit et l'utilisation de la valeur obtenue de la fonction de coût de la liaison logique afin de mettre à jour les informations sur la topologie du réseau :

$$c(l^i_{mn}) = [\alpha \frac{h^i_{mn}}{N} + (1 - \alpha) \frac{b_l}{C}] \times Min(C(p^i_{uv}))$$

où $c(l^i_{mn})$ représente la valeur de fonction de coût de chaque liaison logique sur chaque plan de longueur d'onde, $l^i_{mn}$ représente la liaison logique depuis le noeud m jusqu'au noeud n, et $h^i_{mn}$ représente une quantité de liaisons de longueurs d'onde dédiées occupées par la liaison logique $l^i_{mn}$ dont la longueur d'onde est $\lambda_i$, N est une quantité de noeuds de réseau, C est la largeur de bande de chaque liaison de longueur d'onde dédiée, $\alpha$ est un coefficient de valeur de fonction de coût ($0<\alpha<1$), $b_l$ représente la largeur de bande restante de la liaison logique actuelle et $Min(C(P^i_{uv}))$ est une valeur minimale de fonction de coût de toutes les liaisons de longueurs d'onde dédiées de la totalité des plans de longueurs d'onde, et
la recherche du trajet présentant la valeur minimale de fonction de coût depuis le noeud source jusqu'au noeud récepteur sur chaque plan de longueur d'onde en fonction des informations mises à jour sur la topologie du réseau.

**2.** Procédé selon la revendication 1, dans lequel, après avoir déterminé le trajet d'acheminement de service en cours, le procédé comprend en outre :

la réception d'un message de demande de libération de service qui comprend un identificateur de noeud source, un identificateur de noeud récepteur et une largeur de bande demandée, et
l'ajout de la largeur de bande demandée à la largeur de bande restante de la liaison logique sur le trajet entre le noeud source et le noeud récepteur.

**3.** Procédé selon la revendication 2, dans lequel la liaison logique est restaurée sur la liaison de longueur d'onde dédiée si la largeur de bande restante de la liaison logique sur le trajet depuis le noeud source jusqu'au noeud récepteur est égale à la largeur de bande de la liaison de longueur d'onde dédiée.

**4.** Unité de détermination de trajet d'acheminement, comprenant :

une unité de réception conçue pour recevoir un message de demande de service qui comprend un identificateur de noeud source, un identificateur de noeud récepteur et
une largeur de bande demandée, **caractérisée par** :

une unité de détermination de trajet, conçue pour : rechercher un trajet présentant une valeur minimale de fonction de coût entre un noeud source et un noeud récepteur sur chaque plan de longueur d'onde en fonction d'informations sur la topologie d'un réseau, de l'identificateur de noeud source, de l'identificateur de noeud récepteur et de la largeur de bande demandée, et conçue pour sélectionner le trajet présentant la valeur minimale de fonction de coût en tant que trajet d'acheminement d'un service en cours, les informations sur la topologie du réseau comprenant des liaisons de longueurs d'onde dédiées et des liaisons logiques, et la valeur de fonction de coût d'une liaison logique étant inférieure à la valeur de fonction de coût d'une quelconque liaison de longueur d'onde dédiée dans un réseau,
dans laquelle l'unité de détermination de trajet comprend :
une unité de calcul conçue pour calculer la valeur de fonction de coût de chaque liaison logique sur chaque plan de longueur d'onde en fonction de la formule qui suit,
lorsque la largeur de bande demandée est inférieure ou égale à la largeur de bande restante d'une liaison logique actuelle:

$$c(l^i_{mn}) = [\alpha \frac{h^i_{mn}}{N} + (1 - \alpha)\frac{b_l}{C}] \times Min(C(p^i_{uv}))$$

où $c(l^i_{mn})$ représente la valeur de fonction de coût de chaque liaison logique sur chaque plan de longueur d'onde, $l^i_{mn}$ représente la liaison logique depuis le noeud m jusqu'au noeud n, et $h^i_{mn}$ représente une quantité de liaisons de longueurs d'onde dédiées occupées par la liaison logique $l^i_{mn}$, dont la longueur d'onde est $\lambda_i$, N est une quantité de noeuds de réseau, C est la largeur de bande de chaque liaison de longueur d'onde dédiée, $\alpha$ est un coefficient de valeur de fonction de coût ($0<\alpha<1$), $b_l$ représente la largeur de bande restante de la liaison logique actuelle et $Min(C(P^i_{uv}))$ est la valeur minimale de fonction de coût de toutes les liaisons de longueurs d'onde dédiées de la totalité des plans de longueurs d'onde,
une unité de mise à jour de valeur de fonction de coût, conçue pour mettre à jour les informations sur la topologie du réseau en fonction de la valeur de la fonction de coût de la liaison logique obtenue par l'unité de calcul, et
une unité d'obtention de trajet, conçue pour rechercher le trajet présentant la valeur minimale de fonction de coût depuis le noeud source jusqu'au noeud récepteur sur chaque plan de longueur d'onde en fonction des informations sur la topologie du réseau mises à jour par l'unité de mise à jour, et conçue pour sélectionner le trajet présentant la valeur minimale de fonction de coût en tant que trajet d'acheminement du service en cours.

5. Internet optique IP sur WDM, comprenant une unité de détermination de trajet d'acheminement conforme à la revendication 4.

Figure 1

Figure 2(a)

$\lambda_1$ Plane

$\lambda_2$ Plane

Figure 2(b)

$\lambda_1$ Plane

$\lambda_2$ Plane

Figure 2(c)

$\lambda_1$ Plane

$n^1_1$ $n^1_2$ $n^1_3$ $n^1_5$ $n^1_6$

0.4 $n^1_4$ 0.8

Figure 2(d)

$\lambda_2$ Plane

$n^2_1$ $n^2_2$ $n^2_3$ $n^2_5$ $n^2_6$

0.3 $n^2_4$

Figure 2(e)

Figure 3

Figure 4

Figure 5

Figure 6

Figure 7

Figure 8

EP 2 058 986 B2

Topology information updating unit

Receiving unit

Calculating unit

Cost function value updating unit

Path obtaining unit

Path determining unit

Routing path determining unit

Figure 9

# EP 2 058 986 B2

**Patent documents cited in the description**

- US 2005232157 A

**Non-patent literature cited in the description**

- A Novel Generic Graph Model for Traffic Grooming in Heterogeneous WDM Mesh Networks. *IEEE/ACM Transactions on Networking,* 2003, vol. 11 (2), 285-299